# EUROPEAN PATENT SPECIFICATION

(11) **EP 3 089 918 B1**
(45) Date of publication and mention of the grant of the patent: **02.12.2020**
(21) Application number: 14812539.6
(22) Date of filing: 16.12.2014
(51) Int. Cl.: B29L 31/00, B29C 45/14, B65D 5/06, B65D 5/70, B32B 15/08, B32B 15/082, B32B 15/085, B32B 15/20, B32B 27/08, B32B 27/10, B32B 27/30, B32B 27/32, B32B 3/08, B32B 3/26

(54) **PACKAGE MATERIAL BLANK, PACKAGE WITH SUCH DEVICE AND METHOD FOR MANUFACTURING AN OPENING DEVICE**
VERPACKUNGSMATERIAL UND VERPACKUNGSBEHÄLTER MIT EINER ÖFFNUNGSVORRICHTUNG DARAUS
MATÉRIAU D'EMBALLAGE ET CONTENANT D'EMBALLAGE POURVU D'UN DISPOSITIF D'OUVERTURE FABRIQUÉ À PARTIR DE CELUI-CI

(30) Priority: 30.12.2013 EP 13199808; 07.05.2014 SE 1450541; 11.09.2014 WO PCT/EP2014/069441
(43) Date of publication of application: 09.11.2016
(73) Proprietor: Tetra Laval Holdings & Finance SA, 1009 Pully (CH)
(72) Inventor: BJÖRK, Jonas, S-222 36 Lund (SE); DANIELSSON, Anders, S-242 91 Hörby (SE)
(74) Representative: Tetra Pak - Patent Attorneys SE
(86) International application number: PCT/EP2014/078016
(87) International publication number: WO 2015/101481

(56) References cited:
- EP-A2- 0 117 125
- WO-A1-2009/154535
- US-A- 4 828 138
- US-A- 5 029 752

## Description

The present invention relates to a package material blank and to a package container comprising such blank. The invention also relates to a method for manufacturing an opening device on a package material blank.

### BACKGROUND OF THE INVENTION

Package containers of the single use disposable type for liquid foods are often produced from a packaging material based on paperboard or carton. Such container is for example be employed for aseptic packaging of liquid foods such as milk, fruit juices etc, marketed and sold for long term ambient storage. The packaging material in such package container is typically a laminate comprising a bulk layer of paper or paperboard, outer, liquid-tight layers of thermoplastics, a gas barrier layer, most commonly an aluminum foil and finally one or more inside layers composed of one or several part layers, comprising heat-sealable adhesive polymers and/or heat-sealable polyolefins.

Package containers of this sort are normally produced on fully automatic packaging machines. In one example, a continuous tube is formed from the web-fed packaging material; the web of packaging material is sterilized in the packaging machine, and the sterilized web of packaging material is maintained in a closed, sterile environment in the subsequent step. The web is folded and sealed longitudinally to form a vertical tube. The tube is filled with the sterilized or sterile- processed food product, and is sealed and subsequently cut along equally spaced cross sections to form pillow packs, which are then folded mechanically to form respective finished, e.g. substantially parallelepiped- shaped, package containers.

Commonly, the package container has an opening device in order to facilitate consumer opening, many different types of opening devices including pull-tabs or molded opening devices, as for example discussed in US5029752, US4828138, WO2009154535, WO03/095199 and WO/2009/000927.

However, the latter type of package is a high-volume (in terms of packages per time unit) and low-cost package (due to the properties of the packaging material), and such opening devices might hamper the production speed and be detrimental for the cost of the package.

For this reason, there is a need for an opening device having a high efficiency in regard of the amount of material used and the time needed for production of each opening device.

### SUMMARY OF THE INVENTION

For the purpose of the invention, the term "Package material blank" or "blank" shall include an individual sheet or a blank in a package material web. Such package material web may comprise one or more "package material blanks" arranged after each other in a continuous web, some of those blanks in different processing stages, i.e. on one blank in such web may comprise an opening device, while other blanks on the web might still be unprocessed.

For the purpose of the invention, the terms container, package and packaging container refer to the same structure. In addition, the terms material, material laminate structure or packaging material refers to the package material blank. The term "cellulosic material" may comprise one or more layers of paper, cardboard or any other cellulosic fiber based material.

The invention, a package material blank, comprises a multilayer material structure having a layer of cellulosic material and one or more layers of plastic laminate. The blank comprises a plastic opening device. The plastic opening device contains two portions arranged on different major sides of the blank and connected via a material bridge penetrating through the material structure. While the second portion is of the opening device is attached to one major side or surface of the blank, the first portion comprises a proximal end connected to the material bridge and a distal end displace from the other major side or surface. The opening device further comprises a grip portion for a consumer to grab. The grip portion is attached to the distal end of the first portion and displaced from the surface of the package material blank.

The displacement of the grip from the surface of the package material enables a consumer to easily grab the portion and bend it for opening the package. The grip is rigidly connected via the first portion and the material bridge penetrating through the package material to the second portion. The penetration allows exerting high forces without ripping the grip portion from the bridge or the second portion. The opening device is easy to manufacture, for instance by injection molding or similar techniques and offers a variety of different shapes.

For this purpose, it is proposed to provide a package material blank with a multilayer material structure having a layer of cellulosic material, one or more layers of plastic laminate and a penetration area. A first mold half is arranged on one side of the package material blank later forming an outside of a package container. A second mold half is on the other side of the package material blank. While the second mold half comprises a recess, the first mold half comprises a cavity with an opening facing the package material.

In this respect, the terms cavity and recess are used with different meaning. A cavity is understood to open up in a direction away from its opening, so a cavity may have a significant undercut. In other words, the area of the opening may be much smaller than an area of a cut parallel to the opening and through the cavity. A recess in contrast thereto is normally becoming narrower and does not have a significant undercut.

To create the opening device on the package material structure, a plastic melt is injected into one of the recess and the cavity. Due to pressure being built up in said cavity or said recess, the melt penetrates through penetration area in the package material structure and fills both recess and cavity completely. Particularly the melt forms the material bridge, the first and second portion, and when filling the cavity also the grip portion of the opening device.

In the next step, the cavity is opened up as to release said grip portion, the grip portion is removed from said cavity by a relative movement between the first mold half and the package material blank.

The proposed method provides an opening device having a grip portion which is spaced apart from a surface of packaging material, thereby preventing the grip portion from being attached to the uppermost material layer. The grip portion is released by opening the mold half and more particularly the cavity of the first mold half.

The opening device is released by moving the second mold half and the package material blank relatively to each other in a direction perpendicular to package material blank. The first mold half is separated into a spacer portion and a recess portion, by moving the recess portion relatively to the package material and the spacer portion in a direction perpendicular to the package material. The spacer portion is arranged between the package material and the grip portion. Then the spacer portion moved relatively to the grip portion in a direction substantially parallel to the packaging material as to withdraw the spacer portion between the grip portion and the packaging material.

Both movement of the spacer portion and the recess portion can partially overlap, when they are performed. For instance the withdrawal can start while the perpendicular movement is still ongoing. The spacer portion provides a displacement of the grip portion from the surface of the package material blank ensuring the grip portion does not attach to the surface of the package material blank during manufacturing of the opening device.

Another aspect is related to the forming of the cavity. For this purpose, a half mold portion having a recess is provided and a spacer portion is arranged such that it partly covers the recess as to form a cavity having an opening. The spacer portion is moved relatively to the recess portion in a direction perpendicular to a plane substantially parallel to a surface of the spacer portion facing the package material until a planar surface is formed.

In subsequent steps the package material blank can be formed into a package container having said opening.

In an aspect of the invention, the grip portion comprises an elongated part, which extends at least partial substantially parallel to the first side. Said elongated part is formed in the cavity and may comprise different shapes, grip features and the like. The parallel arrangement provides some stack ability of packages, particularly if the distance between the package material blank and the grip portion is small and in the range of a few millimeters. The first portion enables to bend the grip portion to adjoin the grip portion to the package material of the container for improved stack-ability.

In an embodiment, a surface of the distal end to which the grip portion is attached to is substantial perpendicular to the package material blank and/or the surface thereof. Hence, the first portion protrudes from the package material blank. In an embodiment, the distal end of the first portion may lie within the penetration area.

The protrusion may follow a curved shape, for example a parabolic, arc-like or circular shape; the focal point of such curved shape may lie in a space between the package material and the grip portion. Alternatively, the protrusion may comprise a ramp like structure, thereby following a substantial linear increase. The exact shape and structure of the protrusion may depend on various circumstances, including but not limited to the forces necessary to open the package material, the shape of the grip portion, size of the bridge, thickness and composition of the penetration area and/or the package material.

The size of the penetration area is larger compared to the size of the material bridge penetrating through the material in the penetration area. Such approach reduces the accuracy for positioning the molding parts on the package material when manufacturing the opening device. The penetration area is attenuated, meaning said area comprises a smaller thickness or another layer composition than the surrounding package material. For example the penetration area may lack one or more layers; particularly it may lack any cardboard, carton or cellulosic layer.

The first portion may be completely arranged inside the penetration area, thereby offering good opening characteristics.

In another aspect, the second portion of the opening device on the other side of the package material blank extends beyond the penetration area. In other words, the area covered by the second portion on the package material blank is larger than the penetration area and thus extends onto the surrounding area of the penetration area as well. This enables high stability and strong attachment to the package material itself withstanding even high forces during opening the package without being torn or pulled off.

To facilitate the opening of the package, the package material blank may comprise in an embodiment a consumer opening area. The consumer area may be separated at least partly from a surrounding area by a line of weakness facilitating the opening. The package material blank is ruptured in a defined manner upon using the plastic opening device to open the consumer opening area. The consumer opening area may also partly comprise the penetration area.

### DESCRIPTION OF THE DRAWING

In the following the present invention will be explained in greater detail using the accompanying drawings, in which
Figure 1 shows a perspective view of an opening device on a package material according to an embodiment of the present invention;
Figure 2 illustrates the bottom view of the embodiment according to Figure 1;
Figure 3 illustrates a cut-view of the embodiment of Figure 1;
Figure 4A shows a cut-view of a reference example not belonging to the invention invention in terms of the penetration area;
Figure 4B shows a cut-view of a reference example not belonging to the invention in terms of the penetration area;
Figure 5 shows a perspective view of a package having an opening device according to the present;
Figure 6 illustrates a cut-view of a molding apparatus for processing package material;
Figure 7 illustrates an embodiment of method for processing the package material blank.

Same or similar features in the following embodiment bear the same reference signs. The various features of the embodiments can be combined in different ways without deviating from the scope of the invention.

### DETAILED DESCRIPTION

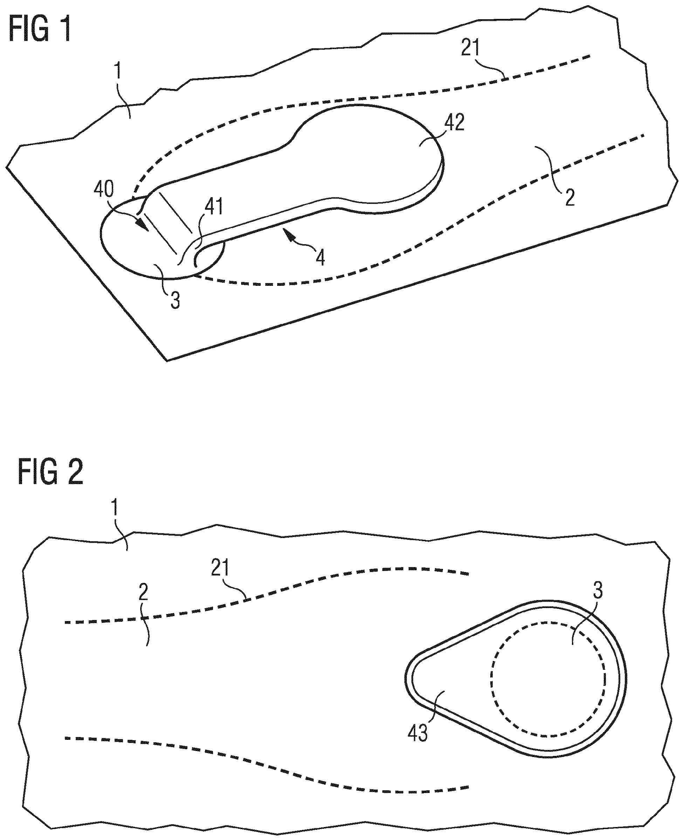

Figure 1 shows an embodiment of an opening device on a package material. The package material is part of a blank, which may in some embodiment be part of a package material web. However, the blank may also be an individual package material blank. The package material blank 1 comprise a multilayer structure having at least one layer of cellulosic material, including for example carton, cardboard, paper or any other fibre based material. The carton or cardboard layer has a thickness of some hundred µm; the thickness depends on the required stability, type of package, size of package and other parameters. The package material blank also comprises one or more plastic layers on both sides of fiber based layer as well as an aluminum layer on the side facing the food product. The specifications of such material are known to a skilled person.

The package material blank comprises a penetration area 3, which in this case is a circular attenuated area, meaning that it lacks the fiber based layer. Consequently, its thickness is smaller and reduced compared to the surrounding area. Penetration area 3 only comprises one or more plastic layers and an aluminum layer in this embodiment. Adjoining to penetration area 3 is a consumer opening area 2, which is separated partly from other area of the package material blank by lines of weakness 21. The lines of weakness comprise a perforation extending from penetration area 3 for facilitating the rupture of the blank along these lines to open the package. At its distal end the consumer area 2 merges into an area not used for opening the package.

The embodiment of figure 1 also comprises an opening device, on which the upper part is shown. The opening device comprises a first portion 41, which protrudes from the penetration area 3 in a shaped manner towards the consumer area 2 and merges at its distal end into a grip portion 42. Grip portion 42 is arranged above consumer area 2 and displaced from the surface of consumer area 2. Hence a small space, mainly provided by the protrusion of first portion 41 above the surface of the package material blank 1, between grip portion 42 and the consumer area 2 is provided. The spacing between the grip portion and the surface of the consumer area 2 prevent the grip portion from being attached to the surface during production. It is also easy for a consumer to grab portion 42 and bend the grip portion upwards.
At a proximal end of the first portion, the first portion is connected via a material bridge through the penetration area to a second portion (not shown) attached to the lower side of the package material blank 1.

For opening the opening device, a consumer can grab the grip portion and pull the grip portion towards the consumer opening area. Due to the material bridge and the second portion, the penetration area will rip open. Then the material in the consumer area 2 will substantially rupture along the perforation lines 21.

Fig 2 is a bottom view of a packaging material blank as described in the embodiment of Figure 1. This side shown here faces the food product in a later stage, when a container is made from the blank. The opening device comprises the second portion 43, which extends beyond the circular penetration area 3. Second portion 43 is attached to the material of penetration area 3 and partly the surrounding areas including consumer area 2. More particular, the second portion comprises an elongated portion extending into consumer opening area 2. The elongated portion supports opening the package, when a consumer pulls the grip portion towards the consumer opening area 2. Second portion comprises a plastic part made by molding, e.g. injection molding, while the penetration area is hidden behind the plastic part and normally not seen from the inside of the packaging container. The perforation lines may also not visible in all embodiment, e.g. the perforation 21 may only extend into the cellulosic layer and an aluminum foil me be placed on said layer to protect the subsequently filled in food product.

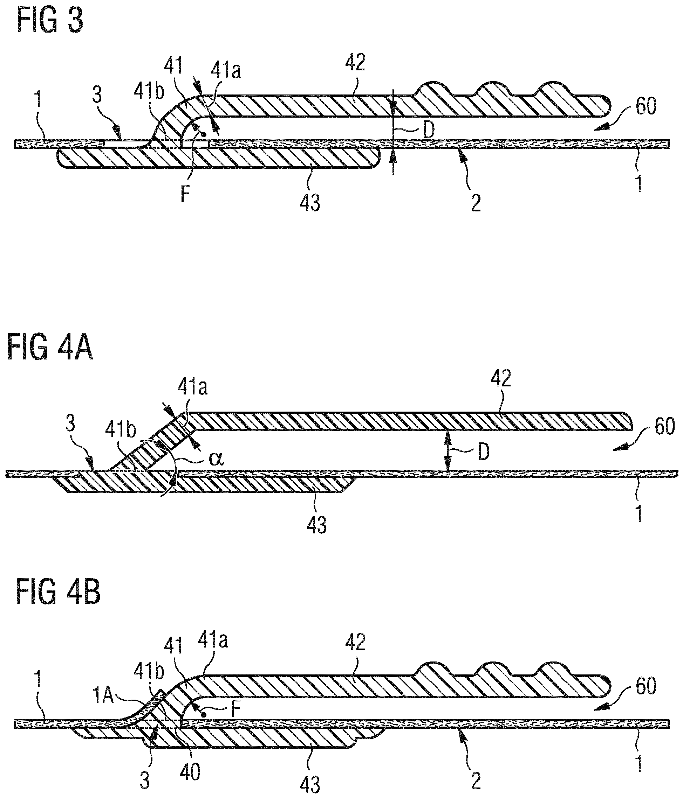

Figure 3 illustrates the cut-view of the embodiment of Figures 1 and 2. The penetration area 3 comprises a smaller thickness than the surrounding area of package material blank 1. The cellulosic layer has been removed and only one or more plastic layers and the aluminum layer remain in penetration area 3. The penetration area 3 is larger than the material bridge 40 of the opening device penetrating area 3.

The material bridge adjoins and connects the first portion 41 with the second portion 43. Second portion 43 does not only cover penetration area 43 completely, but also extends onto the surrounding areas. Second portion is rigidly attached to the package material forming the consumer opening area 2 to prevent the plastic material of the second portion just to be torn of, when a consumer pulls on the grip portion 42. The first portion 41 is attached with its proximal end 41b to the material bridge and with its distal end 41a to the grip portion. As the opening device is made in one piece, e.g. by injection molding, one can say that first portion 41 merges on the one side into the material bridge 40 and on the other side into the grip portion 42. The grip portion 42 is displaced from the surface of blank 1 by a distance D. Said distance can be in the range of some millimeter. It depends on the protrusion of the first portion above the surface of package material blank 1.

In this embodiment first portion comprises a circular shape such that the surface of the distal end 41a is substantial perpendicular to the surface of blank 1. The circular shape can be such that the focal or center point F lies in the space 60 between the grip portion and the surface of the blank 1. Despite the circular shape shown here other shapes, like arcs, parabolic shapes and the like can be used.

Another alternative of such opening device having a different first portion is shown in figure 4A. In this embodiment, the first portion 40 on the proximal end side and the blank or the penetration area 3 forms an angle α smaller than 90°. The first portion protrudes in a linearly increasing way from the level of the package material blank 1 to the distance D at which it merges into the grip portion 42. Consequently, the shape if the first portion is just linearly increasing. The angle α may be about 30° to 45°, depending on the force and other parameter required to provide a good opening. Other values can be chosen as well. The penetration area 3 as not belonging to the invention is a hole through the package material blank 1, which is then completely filled with plastic material forming the bridge.

A reference example not belonging to the invention is shown in Figure 4B. The package material blank 1 is penetrated in the penetration area 3, ripping the material apart and bending a portion 1A of the package material blank upwards attached to the first portion 41. The material bridge 40 is formed by the plastic material filling the space between first and second portion and the package material. Again, the shape of the first portion is curved directed towards the consumer opening area.

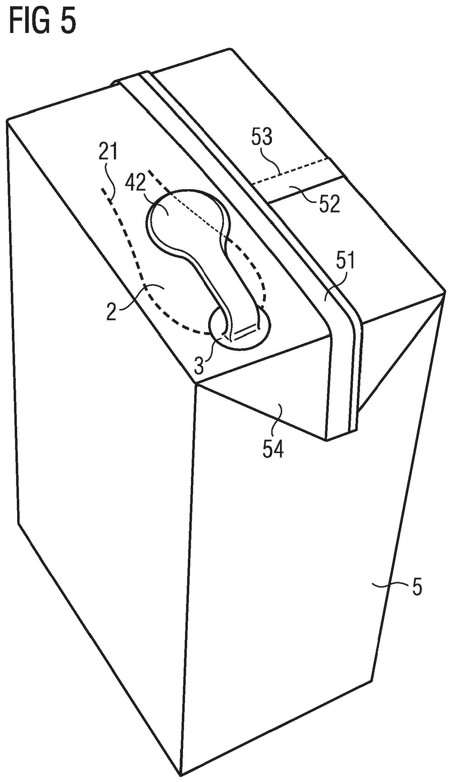

Figure 5 shows an example of a package container 5 produced from the packaging material described in Fig. 1 and which as specified herein has been provided with weakening lines 21 and an attenuation on which an opening device is molded, for example by injection molding.

The grip portion 42 is a part of the opening device which as shown in the previous figures 1 to 3. It also comprises the second portion on the inside of the packaging container connected via the material bridge. The packaging container is particularly suitable for liquid or semi-liquid food products such as beverages, sauces, soups or the like. Typically, such a package has a volume of about 100 ml to 2000 ml. It may be of any configuration such as those described herein, but is for example brick-shaped, comprising longitudinal seal 53, transversal seal 51 and folded flaps 54 on the side. The transversal seal 51 is folded away from the penetration area 3 and the consumer opening area 2. In another embodiment, not shown, the packaging container may be shaped as a wedge. In order to obtain such a "wedge-shape", only the bottom part of the package is fold formed such that the transversal heat-seal of the bottom is hidden under the triangular corner flaps, which are folded and sealed against the bottom of the package. The top section transversal seal is left unfolded. In this way the half-folded packaging container is still easy to handle and dimensionally stable (i.e. keeps form and shape) when put on a shelf in the food store or on a table or the like.

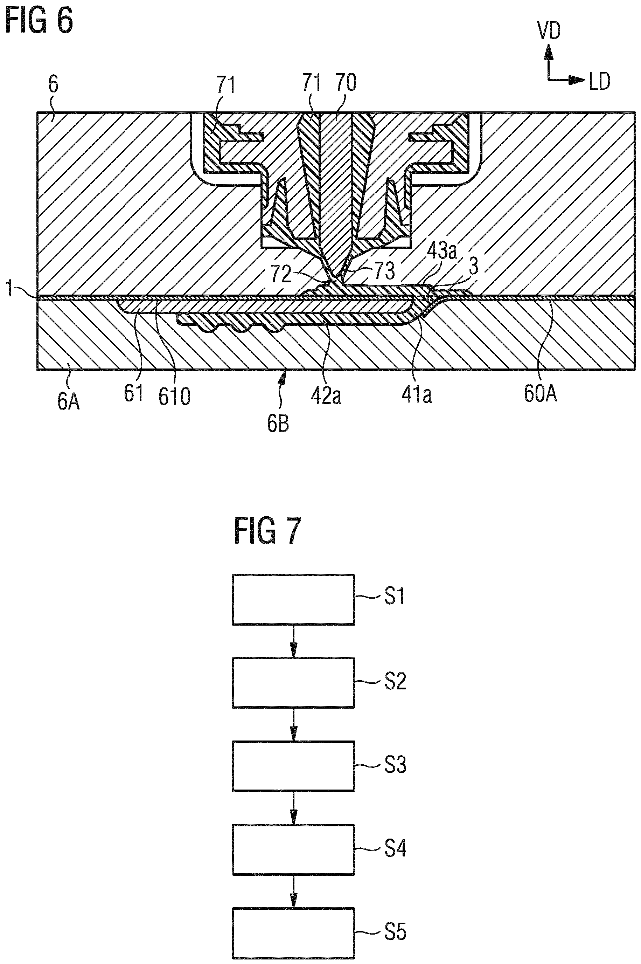

Figure 6 shows a molding tool for manufacturing the opening device according to the present invention. The molding device comprises a lower or first mold half 6A and an upper or second mold half 6. The second mold half 6 comprises a cone or similar arrangement 70. The cone is retracted to allow molten plastic or hot melt under pressure flowing through channel 73 and nozzle 72 into a recess 43a. Recess 43 is arranged in the lower side facing the package material blank 1. It resembles the structure of the second portion of the opening device. The first mold 6A half is arranged on the other side of the package material blank 1. Mold calf comprises two major portions, a mold portion 6B with a planar surface 60A facing package material blank 1 and a movable spacer 61. The spacer 61 is movable along the vertical direction VD. It is arranged in a recess of mold portion 6B to form a cavity 42a for the grip portion. In other words, spacer 61 covers partly the recess of the mold portion to form cavity 42a. Surface 610 of spacer 61 is coplanar with surface 60A of mold portion 6B.

The spacer 61 extends from one side of the recess to the other side, leaving a small opening space. Said opening space resembles the first portion 41, while the cavity is used for molding the grip portion. As illustrated recess 43a is in its lateral dimension significant bigger than opening area. One can say that a projection of the planar dimension or area of cavity 42a onto the package material is larger than the planar dimension of opening, which corresponds basically to the area 3 of the package material blank. In Figure 6, the package material blank 1 is arranged between the two molds half covering the recess 43a of second mold half and opening of the first mold half 6A. Both mold halves and the package material blank 1 are arranged opposite each other in such way that opening faces the recess 43 separated by the penetration area 3 of package material blank 1.

After the mold are placed on the package material blank the hot melt 71 is injected into the recess 43a at high pressure penetrating through the package material blank in area 3 and filling cavity 42a. The two halves are then removed after the molt is hardened. The first mold half is moved in vertical direction VD downwards, while spacer 61 remains in place between the package material blank the and the newly formed grip portion. The second mold half is moved upwards. The package material blank 1 is then moved sideward, for example in longitudinal direction LD. By doing so the spacer 61 is withdrawn from the space between grip portion and package material blank forming the displaced grip portion.

Figure 7 illustrates the various method steps for manufacturing an opening device according to the present invention. In Step S1 the package material is moved between the two mold halves. The package material blank comprises a multilayer material structure having a layer of cellulosic material, one or more layers of plastic laminate and a penetration area. In step S2, the first mold half comprising the cavity with an opening on a first side of the package material blank. Said cavity is formed by moving a spacer portion relatively to a recess portion to partly cover a recess in the recess portion. The spacer portion is arranged such that it forms a coplanar surface with the surface of the recess portion 6A facing the package material blank. An area of the opening facing the package material blank is smaller than a projection of an area of the cavity onto the blank.

In accordance with step S3, a second mold half with a mold recess is then arranged on the other side of the package material blank, whereby the opening area partly overlaps the recess of the second mold half mold half recess in said penetration area.

The plastic mold is injected in step S4 into the recess or the cavity, for example it is injected into the recess at high pressures, thereby penetrating through the material in the overlapping areas. The hot melt fills the cavity and the recess and is at least partly hardened subsequently to form the opening device.

In step S5, the cavity is opened to release the grip portion and the grip portion is removed. The opening can be achieved in reversed order as step S3 and S2, respectively. For instance, the recess portion may be moved downwards away from the package material blank, while the spacer is kept facing the package material plank. To remove the grip portion, the package material blank may be moved in a longitudinal direction.

### REFERENCE LIST

- 1: package material blank
- 1A: package material blank
- 2: consumer opening area
- 21: perforation
- 3: penetration area
- 4: opening device
- 40: material bridge
- 41: first portion
- 41a: distal end
- 41b: proximal end
- 42: grip portion
- 42a: cavity
- 43: second portion
- 43a: recess
- 5: package
- 51: transversal seal
- 52: longitudinal seal
- 54: flap
- 6: second mold half
- 6A: first mold half
- 6B: recess portion
- 60: space
- 60A: surface
- 61: spacer
- 610: surface
- 70: cone
- 71: hot melt
- 72: nozzle
- 73: channel
- F: focal center
- D: distance

## Claims

1. Package material blank comprising a multilayer material structure having a layer of cellulosic material and one or more layers of plastic laminate, the package material blank comprising:
- a first side and a second side opposite the first side and a penetration area (3);
- a plastic opening device (4), the plastic opening device comprising:
a first portion (41) on the first side having a proximal end (41b) adjacent to the first side and a distal end (41a) displaced from the first side;
a second portion (43) attached to the second side;
a material bridge (40) penetrating through the package material blank in the penetration area (3) connecting the proximal end (41b) to the second portion (43);
a grip portion (42) for a consumer to grab and by pulling the grip portion (42) rupturing the package material blank;
wherein the grip portion (42) is attached to the distal end (41a) of the first portion (41) and displaced (D) from the first side of the package material blank (1) and **characterized in that**
the penetration area (3) is attenuated as comprising a smaller thickness or another layer composition than the surrounding package material; and it comprises an area larger than an area covered by the material bridge (40).

2. The package material blank according to claim 1, wherein the grip portion (42) comprises an elongated part, which extends at least partial substantially parallel to the first side.

3. The package material blank according to any of claims 1 to 2, wherein a surface of the distal end (41a) to which the grip portion (42) is attached to is substantial perpendicular to the first side.

4. The package material blank according to any of the preceding claims, wherein the first portion (41) protrudes from the proximal end (41b) on the first side to the distal end (41a) in a curved shape.

5. The package according to claim 4, wherein a focus point (F) of the curved shape lies in a space (60) between the first side and the grip portion (42).

6. The package material blank according to any of claims 1 to 3, wherein the first portion (41) protrudes linearly from the proximal end (41b) on the first side to the distal end (41a).

7. The package material blank according to any of the preceding claims, wherein a projection of the distal end (41a) towards the first side is within the penetration area (3).

8. The package material blank according to any of the preceding claims, wherein the penetration area (3) comprises at least one of:
- multilayer material structure having at least one layer less, than the multilayer material structure of the surrounding area, particularly lacking the layer of cellulosic material;
- a smaller vertical dimension than an area of the package material blank surrounding the penetration area.

9. The package material blank according to any of the preceding claims, wherein the second portion (43) on the second side extends beyond the penetration area (3).

10. The package material blank according to any of the preceding claims, further comprising
- a consumer opening area (2), wherein said package material blank is ruptured in a defined manner on using the plastic opening device (4) to open the consumer opening area (2).

11. The package material blank according to claim 10, wherein the consumer opening area (2) comprises at least partly the penetration area (3).

12. Package container for liquid food product produced from the package material blank according to one of the preceding claims.

13. A method for manufacturing an opening device, comprising the step of:
- providing a package material blank with a multilayer material structure having a layer of cellulosic material, one or more layers of plastic laminate and a penetration area;
- arranging a first mold half comprising a cavity with an opening on a first side of the package material blank, wherein an area of the opening facing the first side is smaller than a projection of an area of the cavity onto the first side;
- arranging a second mold half comprising a mold recess on a second side package material blank opposing the first side, wherein the opening partly overlaps the second mold half recess in said penetration area;
- injecting a plastic melt into at least one of said cavity and said recess, wherein the melt, due to pressure being built up in said cavity or said recess, penetrates through penetration area and fills also at least said recess and cavity thereby forming an opening device;
- generating a grip portion of said opening device in said cavity using the injected plastic melt;
- opening the cavity of said first mold half to release said grip portion;
- remove the said grip portion from said cavity by relatively moving the first mold half and the package material blank;
- moving the second mold half and the package material blank relative to each other in a direction perpendicular to the package material blank;
- separating the first mold half into a spacer portion and a recess portion, by moving the recess portion relative to the package material blank and the spacer portion in a direction perpendicular to the package material and the spacer portion, wherein the spacer portion is arranged between the package material blank and the grip portion;
- moving the spacer portion relative to the grip portion in a direction substantially parallel to the first side as to withdraw the spacer portion between the grip portion and the first side by moving the package material blank sideward.

14. The method of claim 13, wherein arranging the first mold half comprises
- arranging the spacer portion in the recess as to form a planar surface of the first mold half, said planar surface facing the first side.

## Patentansprüche

1. Verpackungsmaterialrohling, umfassend eine Mehrschichtmaterialstruktur mit einer Schicht aus Cellulosematerial und einer oder mehreren Schichten aus Kunststofflaminat, wobei der Verpackungsmaterialrohling umfasst:
- eine erste Seite und eine zweite Seite, die der ersten Seite gegenüber liegt, und eine Durchdringungsfläche (3);
- eine Kunststofföffnungsvorrichtung (4), wobei die Kunststofföffnungsvorrichtung umfasst:
einen ersten Abschnitt (41) auf der ersten Seite mit einem proximalen Ende (41b) neben der ersten Seite und einem distalen Ende (41a), das von der ersten Seite versetzt ist;
einen zweiten Abschnitt (43), der an der zweiten Seite befestigt ist;
eine Materialbrücke (40), welche in der Durchdringungsfläche (3) den Verpackungsmaterialrohling durchdringt und das proximale Ende (41b) mit dem zweiten Abschnitt (43) verbindet;
einen Greifabschnitt (42), den ein Konsument greifen kann und womit er durch Ziehen an dem Greifabschnitt (42) den Verpackungsmaterialrohling aufreißen kann;
wobei der Greifabschnitt (42) an dem distalen Ende (41a) des ersten Abschnitts (41) befestigt und von der ersten Seite des Verpackungsmaterialrohlings (1) versetzt (D) ist, und **dadurch gekennzeichnet, dass**
die Durchdringungsfläche (3) dahingehend geschwächt ist, dass sie eine geringere Dicke oder eine andere Schichtzusammensetzung als das umgebende Verpackungsmaterial umfasst; und dass sie eine Fläche umfasst, die größer als eine durch die Materialbrücke (40) bedeckte Fläche ist.

2. Verpackungsmaterialrohling nach Anspruch 1, wobei der Greifabschnitt (42) ein längliches Teil umfasst, das sich mindestens teilweise im Wesentlichen parallel zu der ersten Seite erstreckt.

3. Verpackungsmaterialrohling nach einem der Ansprüche 1 bis 2, wobei eine Oberfläche des distalen Endes (41a), woran der Greifabschnitt (42) befestigt ist, im Wesentlichen senkrecht zu der ersten Seite ist.

4. Verpackungsmaterialrohling nach einem der vorhergehenden Ansprüche, wobei der erste Abschnitt (41) aus dem proximalen Ende (41b) auf der ersten Seite in einer gekrümmten Form zu dem distalen Ende (41a) vorspringt.

5. Verpackung nach Anspruch 4, wobei ein Fokuspunkt (F) der gekrümmten Form in einem Raum (60) zwischen der ersten Seite und dem Greifabschnitt (42) liegt.

6. Verpackungsmaterialrohling nach einem der Ansprüche 1 bis 3, wobei der erste Abschnitt (41) linear aus dem proximalen Ende (41b) auf der ersten Seite zu dem distalen Ende (41a) vorspringt.

7. Verpackungsmaterialrohling nach einem der vorhergehenden Ansprüche, wobei eine Projektion des distalen Endes (41a) in Richtung der ersten Seite innerhalb der Durchdringungsfläche (3) liegt.

8. Verpackungsmaterialrohling nach einem der vorhergehenden Ansprüche, wobei die Durchdringungsfläche (3) mindestens eines der folgenden umfasst:
- Mehrschichtmaterialstruktur mit mindestens einer Schicht weniger als die Mehrschichtmaterialstruktur der umgebenden Fläche, wobei insbesondere die Schicht des Cellulosematerials fehlt;
- eine kleinere vertikale Abmessung als die Fläche des Verpackungsmaterialrohlings, welche die Durchdringungsfläche umgibt.

9. Verpackungsmaterialrohling nach einem der vorhergehenden Ansprüche, wobei der zweite Abschnitt (43) auf der zweiten Seite sich über die Durchdringungsfläche (3) hinaus erstreckt.

10. Verpackungsmaterialrohling nach einem der vorhergehenden Ansprüche, ferner umfassend:
- eine Öffnungsfläche für den Konsumenten (2), wo der Verpackungsmaterialrohling in einer definierten Weise durch Verwenden der Kunststofföffnungsvorrichtung (4) aufgerissen wird, um die Öffnungsfläche für den Konsumenten (2) zu öffnen.

11. Verpackungsmaterialrohling nach Anspruch 10, wobei die Öffnungsfläche für den Konsumenten (2) mindestens teilweise die Durchdringungsfläche (3) umfasst.

12. Verpackungsbehälter für Flüssignahrungsprodukt, der aus dem Verpackungsmaterialrohling gemäß einem der vorhergehenden Ansprüche hergestellt ist.

13. Verfahren zum Fertigen einer Öffnungsvorrichtung, umfassend die Schritte:
- Bereitstellen eines Verpackungsmaterialrohlings mit einer Mehrschichtmaterialstruktur, die eine Schicht aus Cellulosematerial, eine oder mehrere Schichten aus Kunststofflaminat und eine Durchdringungsfläche aufweist;
- Anordnen einer ersten Formhälfte, die einen Hohlraum mit einer Öffnung umfasst, auf einer ersten Seite des Verpackungsmaterialrohlings, wobei eine Fläche der Öffnung, die zu der ersten Seite weist, kleiner als eine Projektion einer Fläche des Hohlraums auf die erste Seite ist;
- Anordnen einer zweiten Formhälfte, die eine Formvertiefung umfasst, auf einer zweiten Seite des Verpackungsmaterialrohlings, die der ersten Seite gegenüber liegt, wobei die Öffnung die Vertiefung der zweiten Formhälfte in der Durchdringungsfläche teilweise überlappt;
- Einspritzen einer Kunststoffschmelze in mindestens eines von dem Hohlraum und der Vertiefung, wobei die Schmelze infolge von Druckaufbau in dem Hohlraum oder der Vertiefung die Durchdringungsfläche durchdringt und auch mindestens die Vertiefung und den Hohlraum füllt, wodurch eine Öffnungsvorrichtung gebildet wird;
- Erzeugen eines Greifabschnitts der Öffnungsvorrichtung in dem Hohlraum unter Verwendung der eingespritzten Kunststoffschmelze;
- Öffnen des Hohlraums der ersten Formhälfte, um den Greifabschnitt freizugeben;
- Entfernen des Greifabschnitts aus dem Hohlraum, indem die erste Formhälfte und der Verpackungsmaterialrohling relativ bewegt werden;
- Bewegen der zweiten Formhälfte und des Verpackungsmaterialrohlings relativ zueinander in einer Richtung senkrecht zu dem Verpackungsmaterialrohling;
- Trennen der ersten Formhälfte in einen Distanzabschnitt und einen Vertiefungsabschnitt, indem der Vertiefungsabschnitt relativ zu dem Verpackungsmaterialrohling und dem Distanzabschnitt in eine Richtung senkrecht zu dem Verpackungsmaterial und dem Distanzabschnitt bewegt wird, wobei der Distanzabschnitt zwischen dem Verpackungsmaterialrohling und dem Greifabschnitt angeordnet ist;
- Bewegen des Distanzabschnitts relativ zu dem Greifabschnitt in eine Richtung, die im Wesentlichen parallel zu der ersten Seite ist, um so den Distanzabschnitt zwischen dem Greifabschnitt und der ersten Seite zurückzuziehen, indem der Verpackungsmaterialrohling seitwärts bewegt wird.

14. Verfahren nach Anspruch 13, wobei Anordnen der ersten Formhälfte umfasst:
- Anordnen des Distanzabschnitts in der Vertiefung, um so eine planare Oberfläche der ersten Formhälfte zu bilden, wobei die planare Oberfläche zu der ersten Seite weist.

## Revendications

1. Découpe de matériau d'emballage comprenant une structure de matériau multicouche ayant une couche de matériau cellulosique et une ou plusieurs couches de stratifié plastique, la découpe de matériau d'emballage comprenant :
- un premier côté et un second côté opposé au premier côté et une zone de pénétration (3) ;
- un dispositif d'ouverture en plastique (4), le dispositif d'ouverture en plastique comprenant :
une première partie (41) sur le premier côté ayant une extrémité proximale (41b) adjacente au premier côté et une extrémité distale (41a) décalée par rapport au premier côté ;
une seconde partie (43) fixée au second côté ;
un pont de matériau (40) pénétrant à travers la découpe de matériau d'emballage dans la zone de pénétration (3) reliant l'extrémité proximale (41b) à la seconde partie (43) ;
une partie de saisie (42) permettant à un consommateur de saisir et de tirer la partie de saisie (42), rompant la découpe de matériau d'emballage ;
la partie de saisie (42) étant fixée à l'extrémité distale (41a) de la première partie (41) et décalée (D) par rapport au premier côté de la découpe de matériau d'emballage (1),
et **caractérisée en ce que**
la zone de pénétration (3) est atténuée comme comprenant une épaisseur ou une autre composition de couche inférieure au matériau d'emballage environnant ; et elle comprend une zone plus grande qu'une zone recouverte par le pont de matériau (40).

2. Découpe de matériau d'emballage selon la revendication 1, la partie de saisie (42) comprenant une partie allongée, qui s'étend au moins partiellement sensiblement parallèlement au premier côté.

3. Découpe de matériau d'emballage selon l'une quelconque des revendications 1 et 2, une surface de l'extrémité distale (41a) à laquelle la partie de saisie (42) est fixée étant sensiblement perpendiculaire au premier côté.

4. Découpe de matériau d'emballage selon l'une quelconque des revendications précédentes, la première partie (41) faisant saillie depuis l'extrémité proximale (41b) sur le premier côté jusqu'à l'extrémité distale (41a) sous une forme incurvée.

5. Emballage selon la revendication 4, un point focal (F) de la forme incurvée se trouvant dans un espace (60) entre le premier côté et la partie de saisie (42).

6. Découpe de matériau d'emballage selon l'une quelconque des revendications 1 à 3, la première partie (41) faisant saillie linéairement depuis l'extrémité proximale (41b) sur le premier côté vers l'extrémité distale (41a).

7. Découpe de matériau d'emballage selon l'une quelconque des revendications précédentes, une projection de l'extrémité distale (41a) vers le premier côté étant à l'intérieur de la zone de pénétration (3).

8. Découpe de matériau d'emballage selon l'une quelconque des revendications précédentes, la zone de pénétration (3) comprenant au moins l'une parmi :
- une structure de matériau multicouche ayant au moins une couche de moins que la structure de matériau multicouche de la zone environnante, en particulier dépourvue de la couche de matériau cellulosique ;
- une dimension verticale plus petite qu'une zone de la découpe de matériau d'emballage entourant la zone de pénétration.

9. Découpe de matériau d'emballage selon l'une quelconque des revendications précédentes, la seconde partie (43) sur le second côté s'étendant au-delà de la zone de pénétration (3).

10. Découpe de matériau d'emballage selon l'une quelconque des revendications précédentes, comprenant en outre :
- une zone d'ouverture pour le consommateur (2), ladite découpe de matériau d'emballage étant rompue d'une manière définie lors de l'utilisation du dispositif d'ouverture en plastique (4) pour ouvrir la zone d'ouverture pour le consommateur (2).

11. Découpe de matériau d'emballage selon la revendication 10, la zone d'ouverture pour le consommateur (2) comprenant au moins partiellement la zone de pénétration (3).

12. Récipient d'emballage pour produit alimentaire liquide fabriqué à partir de la découpe de matériau d'emballage selon l'une des revendications précédentes.

13. Procédé de fabrication d'un dispositif d'ouverture, comprenant l'étape de :
- fourniture d'une découpe de matériau d'emballage avec une structure de matériau multicouche ayant une couche de matériau cellulosique, une ou plusieurs couches de stratifié plastique et une zone de pénétration ;
- agencement d'une première moitié de moule comprenant une cavité avec une ouverture sur un premier côté de la découpe de matériau d'emballage, une zone de l'ouverture orientée vers le premier côté étant plus petite qu'une projection d'une zone de la cavité sur le premier côté ;
- agencement d'une seconde moitié de moule comprenant un évidement de moule sur une découpe de matériau d'emballage du second côté opposé au premier côté, l'ouverture chevauchant partiellement l'évidement de la seconde moitié de moule dans ladite zone de pénétration ;
- injection d'une matière fondue de plastique dans au moins l'un de ladite cavité et dudit évidement, la matière fondue, en raison de la pression qui s'accumule dans ladite cavité ou ledit évidement, pénétrant à travers la zone de pénétration et remplissant également au moins ledit évidement et ladite cavité, formant ainsi un dispositif d'ouverture ;
- génération d'une partie de saisie dudit dispositif d'ouverture dans ladite cavité en utilisant la matière fondue plastique injectée ;
- ouverture de la cavité de ladite première moitié de moule pour libérer ladite partie de saisie ;
- retrait de ladite partie de saisie de ladite cavité en déplaçant relativement la première moitié de moule et la découpe de matériau d'emballage ;
- déplacement de la seconde moitié de moule et de la découpe de matériau d'emballage l'une par rapport à l'autre dans une direction perpendiculaire à la découpe de matériau d'emballage ;
- séparation de la première moitié de moule en une partie d'espacement et une partie d'évidement, en déplaçant la partie d'évidement par rapport à la découpe de matériau d'emballage et la partie d'espacement dans une direction perpendiculaire au matériau d'emballage et à la partie d'espacement, la partie d'espacement étant agencée entre la découpe de matériau d'emballage et la partie de saisie ;
- déplacement de la partie d'espacement par rapport à la partie de saisie dans une direction sensiblement parallèle au premier côté de manière à retirer la partie d'espacement entre la partie de saisie et le premier côté en déplaçant la découpe de matériau d'emballage latéralement.

14. Procédé selon la revendication 13, l'agencement de la première moitié de moule comprenant :
- l'agencement de la partie d'espacement dans l'évidement de manière à former une surface plane de la première moitié de moule, ladite surface plane étant orientée vers le premier côté.
